# EUROPEAN PATENT SPECIFICATION

(11) **EP 3 756 257 B1**
(45) Date of publication and mention of the grant of the patent: **24.11.2021**
(21) Application number: 18711828.6
(22) Date of filing: 23.02.2018
(51) Int. Cl.: H02J 3/18, H02J 3/36, H02M 1/32, H02M 7/483, H02M 7/757

(54) **DC CURRENT CONTROL IN VSC BASED HVDC CONVERTERS**
GLEICHSTROMSTEUERUNG BEI VSC-BASIERTEN HVDC-WANDLERN
COMMANDE DE COURANT CONTINU DANS DES CONVERTISSEURS HVDC BASÉS SUR UN VSC

(43) Date of publication of application: 30.12.2020
(73) Proprietor: Hitachi Energy Switzerland AG, 5400 Baden (CH)
(72) Inventor: BARUPATI, Praveen Kumar, 771 34 Ludvika (SE); JONSSON, Tomas, 616 90 Aby (SE)
(74) Representative: AWA Sweden AB
(86) International application number: PCT/EP2018/054491
(87) International publication number: WO 2019/161906

(56) References cited:
- EP-A1- 2 599 199
- LU MAOZENG ET AL: "Zero DC voltage ride through of a hybrid modular multilevel converter in HVDC systems", IET RENEWABLE POWER GENERA, THE INSTITUTION OF ENGINEERING AND TECHNOLOGY, MICHAEL FARADAY HOUSE, SIX HILLS WAY, STEVENAGE, HERTS. SG1 2AY, UK, vol. 11, no. 1, 11 January 2017 (2017-01-11), pages 35-43, XP006061126, ISSN: 1752-1416, DOI: 10.1049/IET-RPG.2016.0108

## Description

### Technical field

The present disclosure relates to the field of controlling voltage source converter (VSC) stations. In particular, the present disclosure relates to the field of controlling VSC stations having one or more modular multi-level converters (MMCs).

### Background

Voltage source converter (VSC) stations used in high-voltage power transmission systems may including one or more modular multi-level converters (MMCs) with series connected cells or submodules. These converters generally use capacitors as energy storage elements. In such converters, an extra control variable is present in the form of sum cell capacitor voltage or converter energy. The other control variables may correspond to reactive power and active power/DC voltage.

In MMCs based on half-bridge (HB) cells, the alternating current (AC) voltage magnitude may depend on the DC voltage. As a consequence, the sum cell capacitor voltage and the DC voltage may be linked and it may be sufficient to control only one of them, thereby reducing the number of control variables.

In MMCs including one or more full-bridge (FB) cells, however, the AC voltage and the DC voltage may be decoupled, thereby decoupling the sum cell capacitor voltage from the DC voltage. The extra control variable (the sum cell capacitor voltage) requires an extra controller, making the control of FB-MMCs more complex. There is therefore a need for an improved control method for such VSC stations.

Examples of prior art may be found in an article entitled "Zero DC voltage ride through of a hybrid modular multilevel converter in HVDC systems" by Lu Maozeng et al, IET Renewable Power Genera, The Institution of Engineering and Technology, Michael Faraday House, Six Hills Way, Stevenage, Herts. SG1 2AY, UK, vol. 11, no. 1, 11 January 2017, pages 35-43, in EP2599199 entitled "HVDC converter comprising fullbridge cells for handling a DC side short circuit" and in WO2017/198724 entitled "Control of voltage source converters, and in WO2017010388 a dc current controller followed by a voltage controller, wherein a switch over to fault handling occurs, is disclosed.

### Summary

The present disclosure seeks to at least partly fulfill the above need. To achieve this, a method of controlling a VSC station forming part of a high-voltage power transmission system, a VSC station, and a high-voltage power system as defined in the independent claims are provided.

The DC current controller may allow to control an active power coming in to or going out from the converter by regulating the DC voltage. The DC current controller may allow to control the DC current in accordance with the DC current reference by regulating the DC voltage in accordance with the DC voltage correction.

The independent control of DC voltage (without affecting the AC voltage) thereby obtained may allow for additional control on the DC side, and e.g. to control the power/current on the AC side and DC side separately. The DC current controller may for example be used both when the VSC station is in a power control mode or in a voltage control mode.

DC voltage regulation may be performed e.g. purely by adjusting a DC part of a modulation index or the DC voltage reference to valve arms in the VSC station. Such a regulation may be fast, allowing for rapid changes in DC voltages and DC power. An eventual mismatch between the powers from the AC side and DC side resulting in a change in sum cell capacitor voltages (i.e. to a finite sum cell capacitor voltage error) may result in an increase or decrease of AC power in order to bring the sum cell capacitor voltage error to zero, thereby matching the AC and DC powers such that the operating point of the VSC may be reached. The method according to the present disclosure may provide an improved steady state performance of the high-voltage transmission system, improve transient performance and improve both reliability and availability.

When determining that the DC fault has occurred, the method allows the (DC) fault current to be controlled to zero or close to zero. This may for example avoid having to block the VSC during such a DC fault, as will be described later herein. As used herein, "close to zero" with reference to a current (or a current reference, or other value) may for example mean a current (or current reference, or other value) whose magnitude is less than a few tens of Amperes. For example, a zero or close to zero value of a current may include currents in the interval 0 +/- 30 A, or currents belonging to one or more of the intervals 0 +/- 25 A, 0 +/- 20 A, 0 +/- 15 A, or 0 +/- 10 A. The exact value of the DC fault current, as controlled in the method when the DC fault has occurred, may be sufficiently low to handle the DC fault without blocking the VSC.

In conventional transmission systems, known methods of clearing a DC (line) fault may include installing on or more DC breakers if the converter is based on half-bridge cells; or to block cells if the converter is based on full-bridge cells or other type of cells which has fault current blocking capability. If the requirements on the fault clearing time so allows, it may also be possible to clear the DC fault current by blocking a half-bridge cell based converter, open the AC breaker and wait for the DC current to decay. These known techniques may give rise to an increased converter cost, as well as increased losses and/or increased station costs due to installation of additional DC breakers. The method according to the present disclosure may allow to handle DC faults with a reduced converter cost as well as losses, meanwhile achieving an improved system performance while clearing DC line faults and recover to pre-fault operation, without having to block the VSC (cell or cells).

In some embodiments, controlling the DC fault current to zero or close to zero may include determining that the DC current reference has a zero or close to zero value. The current may be controlled to follow the DC reference current. As described earlier herein, a zero or close to zero value of the DC reference current may include current values less than a few tens of Amperes. In the method as defined in appended independent claim 1,
controlling the DC fault current to zero or close to zero includes determining that the DC current reference at least temporarily has a zero or close to zero value. This may include for example the DC current reference having at least one zero-crossing, or the DC current reference at least temporarily being close to zero such that, as described earlier herein, the DC fault current (which may be controlled to follow the DC reference current) is small enough to resolve the DC fault.

In some embodiments, on the basis that it is determined that the DC fault has occurred, the DC current reference may have at least one sinusoidal current component. The amplitude of the sinusoidal component may be large enough to at least temporarily bring the DC current reference value to zero or close to zero. For example, the DC current reference may have a constant component (which may be non-zero, or zero or close to zero), and a sinusoidal component which may oscillate with time. The sum of the constant and sinusoidal components may be such that the total value of the DC current reference at least temporarily is zero or close to zero. Herein, although referred to as a "DC" current reference, it is envisaged that, at least during the DC fault, the DC current reference may oscillate with time.

In some embodiments, the method may include determining, on a basis that it is determined that the DC fault has not occurred, the DC current reference based on an active power reference and at least one of the actual DC voltage and the ordered DC voltage.

In some embodiments, the DC current may be obtained based on an ordered DC current. The ordered DC current may be obtained based on a fraction of the active power reference to the actual DC voltage. For example, the ordered DC current may be obtained by dividing the active power reference with the actual DC voltage.

In some embodiments, the DC current reference may be obtained based on an amplitude limiting of the ordered DC current. In the method as defined in appended independent claim 1, the DC voltage correction is determined by the DC current controller based on a DC current error. The DC current error ₗis obtained based on a difference between the DC current reference and an actual DC current (i.e. a DC current as measured on the DC line).

In some embodiments, the DC voltage correction may be obtained by the DC current controller based on the DC current error using a proportional-integral- (PI-) controller/regulator. It is envisaged also that other forms of such controllers/regulators may be used, such as for example proportional-controllers or similar. In the method as defined in appended independent claim 1, it is determined, on a basis that it is determined that the DC fault has not occurred, that the DC current reference is equal to the actual DC current. Phrased differently, the DC current error to the DC current controller may then be zero.

In some embodiments, e.g. when it is determined whether the DC fault has occurred, the active power reference (at a power controlling end, i.e. at a station currently controlling the active power), may be obtained by adding, to an ordered active power (i.e. an active power order), an active power error. The active power error may be based on a difference between the ordered active power and an actual active power (i.e. an active power as measured).

In some embodiments, the method may include determining whether the VSC station is in a DC voltage control mode. The method may further include generating, on a basis that it is determined that the VSC station is in the DC voltage control mode, the DC voltage reference by summing the DC voltage correction and one of the ordered DC voltage and the actual DC voltage. The method may for example include summing the DC voltage correction and the ordered DC voltage. If the VSC is in a DC voltage control, and if for example there is no DC fault, the method may for example include using the ordered DC voltage as the DC voltage reference (e.g. by assuming that the DC voltage correction is zero).

In some embodiments, e.g. if it is determined whether the DC fault has occurred, the method may further include determining, on the basis that it is determined that the DC fault has not occurred, that the DC voltage correction has a zero value. It is envisaged that, in such a situation, determining that the DC voltage correction has a zero value may be obtained both using the DC current controller and without using the DC current controller.

In some embodiments, the one of the ordered DC value and the actual DC value may be corrected, before summing, using a feedback loop and based on a DC voltage error. The DC voltage error may be obtained based on a difference between the actual DC voltage and the generated DC voltage reference. The feedback loop may be used e.g. when the VSC station is in a DC voltage control mode.

In some embodiments, the ordered DC voltage may be rate limited before being corrected.

In some embodiments, the feedback loop (for correcting the ordered DC voltage) may include a PI-controller. The PI-controller may operate on the DC voltage error (i.e. output a correction value for the ordered DC voltage based on the DC voltage error).

In some embodiments, the method may include determining whether the VSC station is in an active power control mode. The method may further include generating, on a basis that it is determined that the VSC station is in the active power control mode, the DC voltage reference by summing said DC voltage correction and one of the ordered DC voltage and the actual DC voltage. The method may for example include summing the DC voltage correction and the actual DC voltage.

In some embodiments, the switching of the at least one MMC may be based also on an alternating current (AC) voltage reference.

In some embodiments, the method may include determining, using an AC current vector control, at least a d-reference (current) based on a sum cell capacitor voltage error and at least a q-reference (current) based on at least one of a reactive power error and an AC voltage error. The method may include determining the AC voltage reference based on the d-reference and the q-reference. A sum of cell capacitor voltage may represent the energy stored in the converter. By defining the d-axis (current) reference, the sum of cell capacitor voltages may be controlled (via the sum cell capacitor voltage error) on the AC side. A rise or fall in energy stored in the converter cells may represent a difference between power coming in to the converter and power going out from the converter. If the incoming power and the outgoing power are the same (neglecting losses), the sum cell capacitor voltages may be intact.

As an example, a reduction in cell capacitor voltages may represent a situation wherein the incoming power is higher than the outgoing power. If such a situation was to continue, cell capacitor voltages may continue to drop and the converter may not be able to generate sufficient AC and DC voltages to stop a further reduction in cell capacitor voltages. With the method of the present disclosure, the d-axis (current) reference may be decreased or increased depending on whether the converter operates as a rectifier or inverter, and the sum cell capacitor voltages may be maintained. The DC current controller on the DC side may continue to regulate the DC voltage in order to keep the DC power or DC voltage at their respective reference values.

In some embodiments, the switching of the at least one MMC may be based also on at least one of a circulating current control component and a ripple compensation control component. One or both of the circulating current control component and the ripple compensation control component may for example be added/subtracted to, or in other ways modify, the DC voltage reference before the latter is used to perform the switching.

According to a second aspect of the present disclosure, a VSC station for a high-voltage power transmission system is provided. The VSC station may include at least one MMC. The VSC station may further include a controller. The controller may be adapted to control (e.g. by switching) the at least one MMC by performing the method according to appended independent claim 1.

The controller may e.g. be adapted to control the at least one MMC by controlling DC current according to the method during the occurrence of a DC fault in/on the power transmission system.

According to a third aspect, a high-voltage power transmission system is provided. The transmission system may include a first converter station and a second converter station (that may be connected together via for example a DC transmission link). At least one of the first converter station and the second converter station may be a VSC station according to the second aspect of the present disclosure.

In some embodiments of the above aspects, e.g. of the method, the VSC station and/or the high-voltage power transmission system, the at least one MMC may include at least one full-bridge MMC (a FB-MMC) submodule.

The present disclosure relates to all possible combinations of features recited in the claims. Objects and features described according to the first aspect may be combinable with, or replaced by, objects and features described according to the second aspect and/or the third aspect, and vice versa.

Further objects and advantages of the various embodiments of the present disclosure will be described below by means of exemplifying embodiments.

### Brief description of the drawings

Exemplifying embodiments will be described below with reference to the accompanying drawings, in which:
Figure 1 illustrates schematically an embodiment of an AC vector controller/method step according to the present disclosure;
Figures 2a and 2b illustrate schematically various embodiments of a DC current controller/method step according to the present disclosure;
Figure 3 illustrates schematically an embodiment of a power reference module/method step according to the present disclosure;
Figure 4 illustrates schematically an embodiment of a DC voltage reference module/method step according to the present disclosure;
Figure 5 illustrates schematically an embodiment of a feedback loop/ method step according to the present disclosure;
Figure 6 illustrates schematically an embodiment of a controller/control method for a VSC according to the present disclosure;
Figure 7 illustrates schematically an embodiment of a VSC station according to the present disclosure; and
Figure 8 illustrates schematically an embodiment of a high-voltage power transmission system according to the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the figures, the sizes of elements and regions may be exaggerated for illustrative purposes and, thus, are provided to illustrate the general structures of the embodiments.

### Detailed description

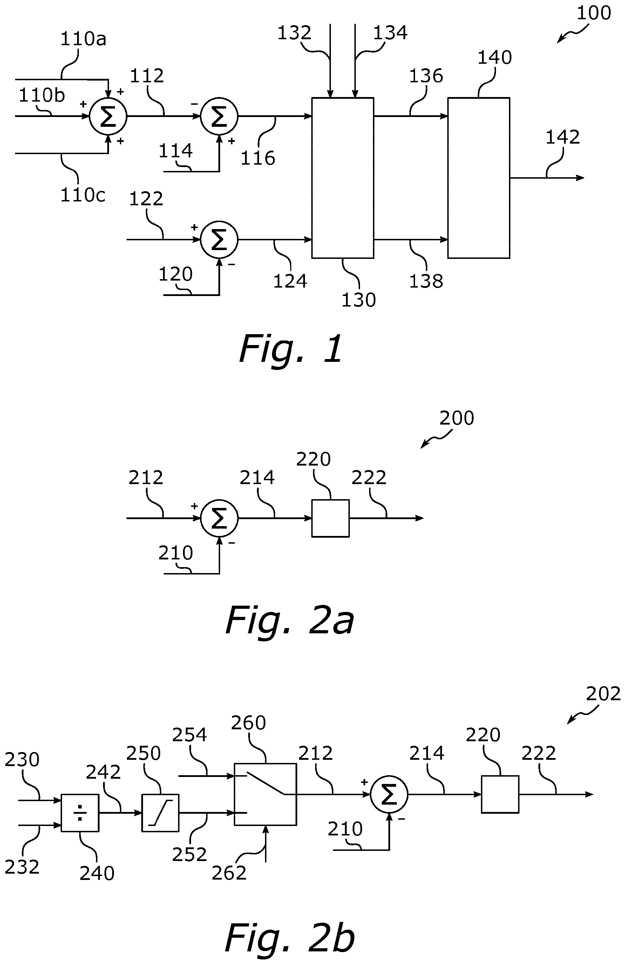

With reference to Figures 2a and 2b, various embodiments of a DC current controller according to the present disclosure will now be described in the following.

Figure 2a illustrates schematically a DC current controller 200. The DC current controller 200 is an example of a DC current controller. It is envisaged that the exact configuration of the DC current controller as referred to in one or more methods and/or devices and/or arrangements of the present disclosure may also have a different configuration than the one illustrated in e.g. Figures 2a and 2b.

The DC current controller 200 subtracts an actual DC current 210 from a DC current reference 212 in order to establish a DC current error 214. Using a controller (such as a proportional-integral controller, assumed to be known to the skilled person) 220, the DC current controller 200 generates a DC voltage correction 222 based on the DC current error 214.

Figure 2b illustrates a further embodiment of a DC current controller 202. In the DC current controller 202, the elements and values 210, 212, 214, 220 and 222 correspond to those described above with reference to the DC current controller 200 illustrated in Figure 2a.

In the DC current controller 202, the DC current reference 212 may be established differently depending on if it is determined that a DC fault has occurred in a high-voltage power transmission system (not illustrated) to which a VSC station in which the DC current controller 202 is included is connected. The ability of the DC current controller 202 to determine whether the DC fault has occurred or not is illustrated by the selector 260 and the DC fault indication signal 262.

If it is determined that the DC fault has occurred, e.g. if indicated so by the DC fault indication signal 262, the selector 260 switches such that the DC current reference 212 is equal to the value 254. The value 254 has a zero value or a close to zero value, and the DC current reference 212 may, as a result, be determined also to have a zero value or close to zero value (as defined earlier herein, i.e. equal to a few tens of Amperes or less). This may control the (DC) fault current to zero or close to zero, using the DC current controller 202 and based at least on the DC current reference 212.

If it is determined that the DC fault has not occurred, e.g. if indicated so by the DC fault indication signal 262, the selector 260 switches such that the DC current reference 212 is equal to the value 252. The value 252 corresponds to a DC current reference which is obtained by amplitude limiting an ordered DC current (a DC current order) 242. The amplitude limiting is performed by the amplitude limiter 250. The amplitude limiter 250 may for example limit the amplitude of the ordered DC current to within a certain interval, such as for example between a minimum current limit and a maximum current limit. The values of these limits may be fixed (and decided e.g. by an operator), or be dynamically adjustable and depending on for example one or more system conditions. It is envisaged that the amplitude limiting, and the amplitude limiter 250, are optional.

The ordered DC current 242 may be obtained based on a ratio of an active power reference 230 to the actual DC voltage 232. In the embodiment of the DC current controller 202 as illustrated in Figure 2b, the ordered DC current 242 is obtained by dividing the active power reference 230 with the actual DC voltage using a division module 240. It is envisaged that the division module 240 may also apply other transforms and/or operations if necessary, such as for example scaling, shifting or similar. The active power reference 230 may for example be supplied to the DC current controller 202 by an operator of the VSC station in which the DC current controller 202 is included.

Using the DC current controller 202 as illustrated in Figure 2b, the DC current reference 212 may, depending on if there is determined to have occurred a DC fault or not, be either based on the active power reference 230 and the actual DC voltage 232, or assume a zero value 254.

By taking into account the possibility of an eventual DC fault, the DC current controller 202 may generate the DC voltage reference needed to reduce the DC (fault) current to zero (or close to zero) in case of the DC fault. For example, if, in the event of the DC fault, the DC current reference 212 is zero then the DC current error 214 may equal the negative of the actual DC current 210. The DC current controller 202 may generate the DC voltage correction 222 which will produce/maintain zero DC current. By controlling the DC current to zero during a DC fault, the need to block the converter may be eliminated. During the DC fault, the converter may continue to operate and supply reactive power to the AC system. In some embodiments, if a DC fault is detected and if the VSC is in e.g. a DC voltage control mode, the DC current reference may be equal to the actual (measured) DC current. The error output to the DC current controller may then be zero (or close to zero).

As described herein, the value of the DC current reference 212 may also be determined such that the DC (fault) current, which may be controlled by the DC current controller 220 based at least on the DC current reference 212, at least temporarily is zero or close to zero. This may for example be achieved by determining that the DC current reference 212 at least temporarily has a zero or close to zero value (e.g. has at least one zero-crossing, or a value which is close to zero).

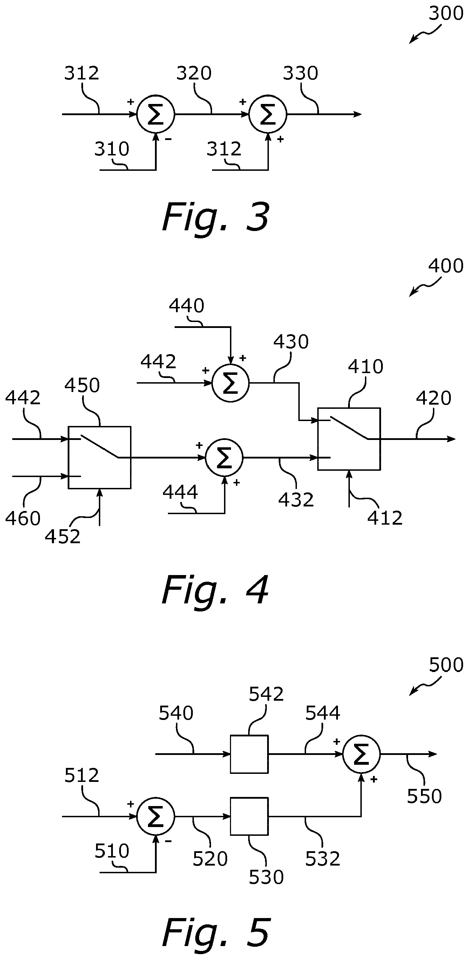

The active power reference 230 used in the DC current controller 202 may also contain one or more losses in the converter station if the active power reference 230 is to be maintained (e.g. at the power control). An illustrative example is provided in Figure 3. In the power reference module 300 in Figure 3, an actual active power 310 is subtracted from an ordered active power 312 in order to determine an active power error 320. The active power error 320 is then added to the ordered active power 312 to output the active power reference 330. The active power reference 330 may for example be used as the active power reference 230 in Figure 2b.

The determined DC voltage correction 222 output from the DC current controller (e.g. the DC current controller 200 or 201 in Figures 2a and 2b, respectively) may be considered as a correction factor that may be added to for example an ordered DC voltage or to an actual DC voltage in order to generate a DC voltage reference which may be used e.g. for switching of one or more converter modules (such as MMCs) in the converter station. An exemplary module for generating such a DC voltage reference based on e.g. a determined DC voltage correction will be described below with reference to Figure 4.

In the DC voltage reference module 400, a DC voltage reference 420 is generated taking into account the control mode of the converter. A control mode may for example be an active power control mode or a DC voltage control mode. The control mode of the converter station may be indicated by a control mode indication signal 412. The DC voltage reference 420 may be generated differently depending on the control mode indication signal 412 using a selector 410.

If the control mode indication signal 412 indicates that the present control mode of the converter (VSC) station is an active power control mode, the selector 410 may set the DC voltage reference 420 equal to the DC voltage reference 430. The DC voltage reference 430 may be determined by adding the DC voltage correction 442 to the actual DC voltage 440. It may be envisaged also that the signal 440 may instead be the ordered DC voltage.

If the control mode indication signal 412 indicates that the current control mode of the converter (VSC) station is a DC voltage control mode, the selector 410 may set the DC voltage reference 420 equal to the DC voltage reference 432. The DC voltage reference 432 may be determined differently depending on whether it is determined that a DC fault has occurred or not. This may be achieved using the selector 450 based on a DC fault indication signal 452. During normal operation, i.e. when the DC fault indication signal 452 indicates that no DC fault has occurred, the DC voltage reference 432 may be generated without influence from the DC current controller. This may be obtained for example by the selector 450 selecting the signal 460 as its input, where the signal 460 may have a zero value. The DC voltage reference 432 may then be equal to the ordered DC voltage 444. It is envisaged also that the signal 444 may instead be the actual DC voltage. Phrased differently, if the converter station operates in a DC voltage control mode and during normal operation without a DC fault, the generated DC voltage reference 420 may be without any contribution from the DC current controller (i.e. from the DC voltage correction 442 as determined by the DC current controller).

If the control mode is a DC voltage control mode, and if the DC fault indication signal 452 indicates that a DC fault has occurred, the selector 450 may instead select the DC voltage correction 442 as its input, whereby the DC voltage reference 432 (and also the DC voltage reference 420) will have a contribution from the DC current controller. The DC voltage reference 420 may then be the sum of the ordered DC voltage 444 and the DC voltage correction 442.

The generated DC voltage reference 420 may be used for switching one or more MMCs in the VSC station. The DC voltage reference 420 may for example be fed directly to the valves in such one or more MMCs.

In a DC voltage control station (that is, in a VSC station operating in a DC voltage control mode), the DC voltage control may be an open-loop control. During disturbances, the sum cell capacitor voltage may start to deviate from its reference value and the generated DC voltage may also be different from its reference value. To counter such issues, it is envisaged also that the DC voltage control may include a feedback loop. An example of such a feedback loop is described with reference to Figure 5. In the feedback loop 500 in Figure 5, the actual DC voltage 510 is subtracted from the generated DC voltage reference 512 in order to determine a DC voltage error 520. The DC voltage error 520 is input to a controller module 530. The controller module 530 may for example be a PI-controller, although it is envisaged also that other types of controller modules may be used. The controller module 530 determines a DC voltage correction 532 based on the DC voltage error 520. The DC voltage correction 532 is then added to the ordered DC voltage 544, and the sum of the DC voltage correction 532 and the ordered DC voltage 544 is output as the new DC voltage reference 550. As illustrated in Figure 5, the ordered DC voltage 544 may first be rate limited before it is added to the DC voltage correction 532. The rate limiting may be performed by a rate limiting module 542, operating on the non-limited ordered DC voltage 540. It is envisaged that the rate limiting may be optional. If the rate limiting is not used, the ordered DC voltage 544 may be equal to the ordered DC voltage 540.

The feedback loop 500 may ensure that the DC voltage is maintained also during disturbances as described above, thereby improving the stability of the converter station (operating e.g. in a DC voltage control mode).

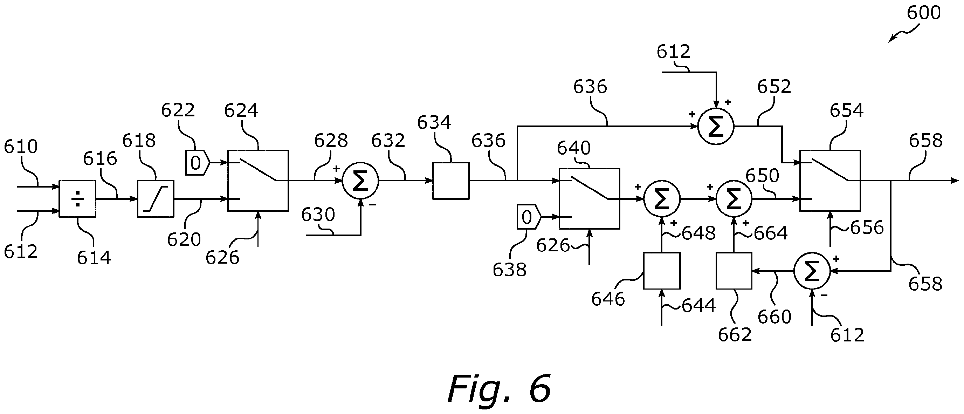

With reference to Figure 6, an example of a control system, or of a control method, for a VSC station according to the present disclosure will now be described in more detail. The example in Figure 6 illustrates one embodiment wherein a DC current controller is used to control DC current in the VSC station during e.g. a DC fault. The example illustrates the use of the DC current controller, and should not be construed as limiting the scope of protection of the method/system as provided in the present disclosure.

In Figure 6, the control system/method 600 generates a DC voltage reference 658 taking into account whether the VSC station (to which the control system belongs, or in which the corresponding method is performed) is in an active power control mode or in a DC voltage control mode, and whether a DC fault has occurred or not. The control mode is indicated by a control mode indication signal 656, and the DC fault status is indicated by a DC fault indication signal 626. The control mode indication signal 656 may be used to control the selector 654, and the DC fault indication signal 626 may be used to control the selector 624 and the selector 640. Based on their respective indication signals 656 and 626, the corresponding selectors 654, 624 and 640 selects one of two input signals which are routed to the selector output. Although illustrated as separate selectors, it is envisaged also that some of the selectors (e.g. the selectors 624 and 640) may be combined into a single selector, and so on.

The control system/method 600 will be described using four different scenarios.

In a first scenario, the VSC operates in an active power control mode and there is no DC fault in the power transmission system to which the VSC is connected (or included in). Consequently, the selector 654 will use its upper input, the selector 640 will use its lower input, and the selector 624 will use its lower input. An active power reference 610 is divided by an actual DC voltage 612 in order to determine an ordered DC current 616. The ordered DC current is optionally (amplitude) limited (using the amplitude limiter 618 as described earlier herein) and then provided as a DC current reference 620. The selector 624 passes the DC current reference 620 to its output as DC current reference 628. An actual DC current 630 (as e.g. measured on the DC line) is subtracted from the DC current reference 628 in order to determine a DC current error 632. The DC current error 632 is passed to a controller (e.g. a PI-controller) 634, which outputs a corresponding DC voltage correction 636 which may be applied in order to make the DC current match the DC current reference 632.

As the VSC is operating in the active power control mode, the DC voltage correction 636 is added to the actual DC voltage 612 and the result is passed along and output as the generated DC voltage reference 658.

In a second scenario, the VSC operates in an active power control mode and there is a DC fault in the power transmission system. Now, the selector 624 selects the zero value 622 as its input (e.g., the DC current reference 620 is assumed to have a zero value, or a close to zero value) and the DC current error 632 equals the negative of the actual DC current 630. The controller 634 determines the corresponding DC voltage correction 636 which may, when added to the actual DC voltage 612, make the DC current approach and reach zero, or close to zero. After adding the actual DC voltage 612 to the DC voltage correction 636, the result is output as the generated DC voltage reference 658. Although indicated as a "zero value" 622, it is envisaged also that the "zero value" 622 is not necessarily constantly zero but at least has at least one zero-crossing, or at least temporarily comes close to zero (e.g. within a few tens of Amperes or less). During the DC fault, the "zero value" 622 may for example include a constant component which is zero or close to zero plus an oscillating component, such that there is at least one zero-crossing. The "zero value" 622 may for example include a constant component (which may be different from zero or close to zero) plus an oscillating (sinusoidal) component having an amplitude such that the sum of the constant and sinusoidal components at least temporarily is zero or close to zero. As described herein, during the DC fault, the DC current controller may take as an input an oscillating DC current reference, and e.g. output an oscillating DC voltage correction.

In a third scenario, the VSC is operating in a DC voltage control mode and there is no DC fault. Consequently, the selector 654 selects its lower input, the selector 640 selects its lower input, and the selector 624 selects its lower input. The DC current controller has no influence on the generated DC voltage reference 658, as the selector 640 selects its lower input which has a zero value signal 638. Phrased differently, it may be assumed that the DC voltage correction 636 has a zero value. The zero value is added to the ordered DC voltage 644 (which is optionally rate limited by the rate limiter 646), 648. The resulting DC voltage reference 650 is passed via the selector 654 as the generated DC voltage reference 658. The control system/method 600 includes a feedback loop as described earlier herein. The actual DC voltage 612 is subtracted from the generated DC voltage reference 658 to determine a DC voltage error 660. Using a controller 662 (such as e.g. a PI-controller), a corresponding DC voltage correction 664 is determined and added to the (optionally rate limited) ordered DC voltage 648 in order to update the DC voltage reference 650. As described earlier herein, the feedback loop may ensure that the DC voltage is maintained even during disturbances and result in an improved converter stability.

In a fourth scenario, the VSC is operating in the DC voltage control mode and there is a DC fault. Consequently, the selector 640 uses its upper input and the selector 624 uses its upper input (as described above). Now, the DC current controller influences the generated DC voltage reference 658 as the DC voltage correction 636 is not assumed to necessarily have a zero value. Instead, the DC voltage correction 636 has the value output by the controller 634 in order to make the DC current approach and reach zero or close to zero, during the DC fault. As described with reference to the second scenario, during the DC fault, the DC current reference 622 may for example be oscillating (i.e. have a sinusoidal current component), and the DC voltage correction 636 may then be oscillating as well.

It should be clearly noted that schematics illustrated in Figures 1, 2a, 2b, 3, 4, 5, and 6, may represent both flowcharts for one or more control methods (or steps thereof), or the flow of signals between actual, physical building blocks of one or more devices/controllers which may perform the corresponding one or more methods, according to the present disclosure and as described herein.

With reference to Figure 1, an embodiment of an AC vector controller/ method step according to the present disclosure will be described in the following.

Figure 1 illustrates schematically an AC vector controller 100. The AC vector controller 100 establishes a sum cell capacitor voltage 112 by summing the respective cell capacitor voltages 110a, 110b and 110c of the respective phases. Here, three phases are envisaged. It is envisaged also that a different number of phases may be used. The sum cell capacitor voltage 112 is subtracted from a sum cell capacitor voltage reference 114 in order to establish a sum cell capacitor voltage error 116.

The AC vector controller 100 also establishes a reactive power error 124 by subtracting an actual reactive power 120 from a reactive power reference 122. Herein, it is envisaged also that the actual reactive power 120 may instead be an actual AC voltage, that the reactive power reference 122 may be an AC voltage reference, and that the reactive power error 124 may instead be a corresponding AC power error.

The established sum cell capacitor voltage error 116 and the established reactive power error 124 (or the established AC voltage error) are fed to a direct/quadrature (dq) current controller 130. The dq current controller 130 also receives actual values of a d-component 132 and a q-component 134. Based on the sum cell capacitor voltage error 116, the reactive power error 124 (or AC voltage error) and the actual d- and q-components 132 and 134, the dq-current controller 130 generates a d-component (current) reference 136 (a "d-reference") and a q-component (current) reference 138 (a "q-reference"). Using a direct/quadrature-to-phase (dq-to-ABC) transformer 140, the d-reference 136 and the q-reference 138 is used to output an AC voltage reference 142.

The inner workings of the dq current controller 130 are assumed to be known to the skilled person.

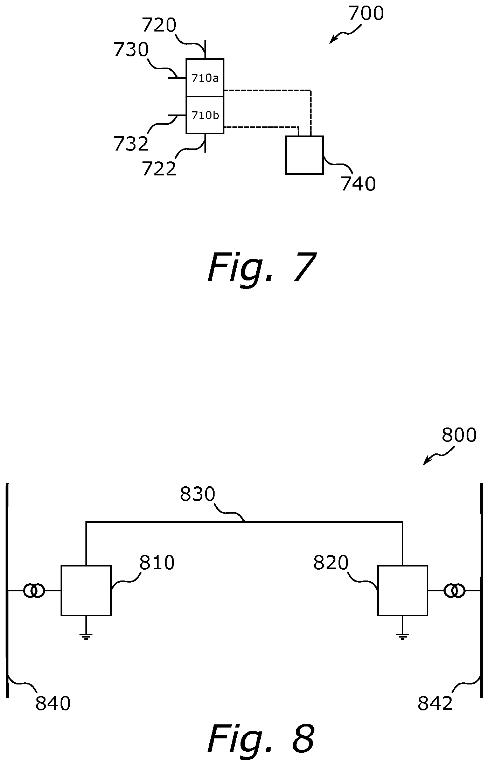

With reference to Figures 7 and 8, a VSC station and a high-voltage power transmission system including a VSC station will be described in the following.

Figure 7 illustrates schematically a VSC station 700. The VSC station 700 may include one or more MMCs. In the embodiment of the VSC station 700 as illustrated in Figure 7, the VSC station 700 includes two MMCs 710a and 710b. It is envisaged also that the VSC station 700 may include fewer, or more, than two MMCs, and that such MMCs may be arranged in different configurations to meet the needs of the power transmission system to which the VSC station 700 may be connected (or included in). The VSC station 700 has DC terminals 720 and 722 with which the VSC station 700 may be connected to e.g. one or more DC lines (not shown). The VSC station 700 has AC terminals 730 and 732 with which the VSC station 700 may be connected, via for example one or more transformers, to an AC grid (not shown). It is envisaged that at least one of the MMCs includes at least one full-bridge MMC (FB-MMC) submodule.

The VSC station 700 includes a controller 740. The controller 740 may control the MMCs 710a and 710b by providing for example a DC voltage reference (and also an AC voltage reference), or generate control signals based on such a DC voltage reference (and such an AC voltage reference) to each MMC (as illustrated by the dashed lines). The controller 740 is adapted to control the MMCs by performing a control method according to the various embodiments as described herein, for example the embodiments described with reference to any one of Figures 1 to 6.

Figure 8 illustrates schematically a high-voltage power transmission system 800. The power transmission system 800 includes a first VSC station 810 and a second VSC station 820. The first VSC station 810 and the second VSC station 820 are connected via a DC transmission link 830, and arranged in a monopole configuration. Each VSC station 810 and 820 are also connected to an AC grid 840 and 842, respectively. It is envisaged that the power transmission system 800 may be arranged using other configurations (such as a bipolar configuration, that different symmetries, such as symmetric or asymmetric, may be used, and that more than two VSC stations may be included). At least one of the first VSC station 810 and the second VSC station 820 is a VSC station as described herein, for example the VSC station 700 described with reference to Figure 7.

The present disclosure provides an improved control method for a VSC station. More specifically, the present disclosure provides an improved control method for switching one or more MMCs in such a VSC station, especially one or more MMCs including at least one FB-MMC submodule. The method may help to control the DC current to zero during DC faults, thereby eliminating the need to block the converter in the VSC converter station. The converter may instead continue to operate and supply reactive power to the AC system.

The method may also provide an improvement in other operating conditions. During for example a static compensation (STATCOM) operation, the AC current vector controller may, based on sum cell capacitor voltage, ensure that enough power is drawn from the AC side for eventual losses and the DC current controller may make sure that there is no DC power. During black start, the sum cell capacitor voltage error may be used to derive the d-reference (current) by drawing enough power from the DC side to charge the cell capacitor voltages to their rated values. Once the cells are charged, the d-reference (current) may be zero and the converter may start supporting the AC system with reactive power.

In summary, the present disclosure provides a new way of controlling converters in a VSC station by using the provided DC current control, especially during DC fault in/on the power transmission system. The present disclosure provides DC fault current control by reducing the DC current to zero without blocking the converter, as well as providing an improved energy control in the converter during disturbances. The present disclosure provides DC voltage control by regulating modulation references to the valves in the converters. The present disclosure provides independent control of AC and DC voltages as well as (active/reactive) powers.

Additionally, variations to the disclosed embodiments may be understood and effected by the skilled person in practicing the claimed invention, as defined in the appended claims. In the claims, the word "comprising" does not exclude other elements, and the indefinite article "a" or "an" does not exclude a plurality.

## Claims

1. A method of controlling direct current, DC, current in a voltage source converter, VSC, station forming part of a high-voltage power transmission system, wherein the VSC station includes at least one modular multi-level converter, MMC, comprising at least one full-bridge MMC, FB-MMC, submodule, said method comprising:
determining a direct current, DC, current reference (212; 628);
determining, using a DC current controller (200; 600), a DC voltage correction (222; 636) based on a DC current error (632) obtained based on a difference between the DC current reference (212; 628) and an actual DC current (210; 630);
generating a DC voltage reference (658) based on a sum of said DC voltage correction (222; 636) and at least one of an actual DC voltage (612) and an ordered DC voltage (644); and
switching said at least one MMC based on said DC voltage reference,
said method being **characterized by**:
determining whether a DC fault has occurred in the power transmission system,
determining, on a basis that it is determined that the DC fault has not occurred, that the DC current reference is equal to the actual DC current, and
controlling, on a basis that it is determined that the DC fault has occurred, a DC fault current to zero or close to zero by said switching, wherein controlling the DC fault current to zero or close to zero includes determining that the DC current reference at least temporarily has a zero or close to zero value.

2. The method of claim 1, wherein controlling the DC fault current to zero or close to zero includes determining that the DC current reference has a constant value of zero or close to zero.

3. The method of claim 1 or 2, wherein, on the basis that it is determined that the DC fault has occurred, the DC current reference has at least one sinusoidal current component.

4. The method of claim any one of the preceding claims, further comprising:
determining, on a basis that it is determined that the DC fault has not occurred, said DC current reference based on an active power reference and at least one of said actual DC voltage and said ordered DC voltage.

5. The method of claim 4, wherein said DC current reference is obtained based on an ordered DC current obtained based on a fraction of said active power reference to said actual DC voltage.

6. The method of claim 5, wherein said DC current reference is obtained based on an amplitude limiting of said ordered DC current.

7. The method of any previous claim, wherein the DC voltage correction is obtained by the DC current controller based on the DC current error using a proportional-integral-, PI-, controller.

8. The method of any one of the preceding claims when depending on claim 4, wherein the active power reference at a power controlling end is obtained by adding, to an ordered active power, an active power error based on a difference between the ordered active power and an actual active power.

9. The method of any one of the preceding claims, further comprising:
determining whether said VSC station is in a DC voltage control mode and
generating, on a basis that it is determined that said VSC station is in the DC voltage control mode, said DC voltage reference by summing said DC voltage correction and one of said ordered DC voltage and said actual DC voltage.

10. The method of claim 9 when depending on claim 4, comprising determining, on the basis that it is determined that said DC fault has not occurred, that the DC voltage correction has a zero value.

11. The method of claim 9 or 10, wherein said one of the ordered DC value and the actual DC value is corrected, before summing, using a feedback loop and based on a DC voltage error obtained based on a difference between the actual DC voltage and the generated DC voltage reference.

12. The method of claim 11, wherein the ordered DC voltage is rate limited before being corrected.

13. The method of claim 11 or 12, wherein the feedback loop comprises a proportional-integral-, PI-, controller operating on the DC voltage error.

14. The method of any one of the preceding claims, further comprising:
determining whether said VSC station is in an active power control mode and
generating, on a basis that it is determined that said VSC station is in the active power control mode, said DC voltage reference by summing said DC voltage correction and one of said ordered DC voltage and said actual DC voltage.

15. The method of any one of the preceding claims, wherein said switching said at least one MMC is based also on an alternating current, AC, voltage reference.

16. The method of claim 15, further comprising determining, using an alternating current, AC, vector control, at least a d-reference based on a sum cell capacitor voltage error and at least a q-reference based on at least one of a reactive power error and an AC voltage error; and
determining said AC voltage reference based on said d-reference and said q-reference.

17. The method of any one of the preceding claims, wherein said switching said at least one MMC is based also on at least one of a circulating current control component and a ripple compensation control component.

18. A voltage source converter, VSC, station (700) for a high-voltage power transmission system, comprising:
at least one modular multi-level converter, MMC, (710a, 710b) comprising at least one full-bridge MMC, FB-MMC, submodule, and
a controller (740) adapted to control said at least one MMC (710a, 710b) by performing the method of any one of the preceding claims.

19. A high-voltage power transmission system (800) adapted to transfer electric power, said system (800) comprising a first converter station (810) and a second converter station (820), wherein at least one of the first converter station (810) and the second converter station (820) is a voltage source converter station according to claim 18.

## Patentansprüche

1. Verfahren zum Steuern von Gleichstrom, GS, -strom in einer VSC-Station (VSC = "Voltage Source Converter"), die Teil eines Hochspannungs-Energieübertragungssystems ist, wobei die VSC-Station mindestens einen modularen "Multi-Level-Converter", MMC, umfasst, der mindestens ein FB-MMC-Submodul (FB-MMC = "Full-Bridge-MMC") beinhaltet, wobei das Verfahren umfasst:
Bestimmen einer Gleichstrom, GS, -stromreferenz (212; 628) ;
Bestimmen, unter Verwendung einer GS-stromsteuerung (200; 600), einer GS-spannungskorrektur (222; 636) basierend auf einem GS-stromfehler (632), der basierend auf einer Differenz zwischen der GS-stromreferenz (212; 628) und einem tatsächlichen GS-strom (210; 630) erhalten wird; Erzeugen einer GS-spannungsreferenz (658) basierend auf einer Summe der GS-spannungskorrektur (222; 636) und einer tatsächlichen GS-spannung (612) und/oder einer geordneten GS-spannung (644); und
Schalten des mindestens einen MMC basierend auf der GS-spannungsreferenz,
wobei das Verfahren **gekennzeichnet ist durch**:
Bestimmen, ob ein GS-fehler im Energieübertragungssystem aufgetreten ist,
Bestimmen auf der Grundlage, dass bestimmt wird, dass der GS-fehler nicht aufgetreten ist, dass die GS-stromreferenz gleich dem tatsächlichen GS-strom ist, und Steuern, auf der Grundlage, dass bestimmt wird, dass der GS-fehler aufgetreten ist, eines GS-fehlerstroms auf Null oder nahe Null **durch** das Schalten, wobei das Steuern des GS-fehlerstroms auf Null oder nahe Null das Bestimmen beinhaltet, dass die GS-stromreferenz zumindest vorübergehend einen Wert von Null oder nahe Null hat.

2. Verfahren nach Anspruch 1, wobei das Steuern des GS-fehlerstroms auf Null oder nahe Null das Bestimmen beinhaltet, dass die GS-stromreferenz einen konstanten Wert von Null oder nahe Null hat.

3. Verfahren nach Anspruch 1 oder 2, wobei, auf der Grundlage, dass bestimmt wird, dass der GS-fehler aufgetreten ist, die GS-stromreferenz mindestens eine sinusförmige Stromkomponente aufweist.

4. Verfahren nach einem der vorhergehenden Ansprüche, ferner umfassend:
Bestimmen, auf der Grundlage, dass bestimmt wird, dass der GS-fehler nicht aufgetreten ist, der GS-stromreferenz, basierend auf einer Wirkleistungsreferenz und mindestens einer der tatsächlichen GS-spannung und der geordneten GS-spannung.

5. Verfahren nach Anspruch 4, wobei die GS-stromreferenz basierend auf einem geordneten GS-strom erhalten wird, der basierend auf einem Bruchteil der Wirkleistungsreferenz zu der tatsächlichen GS-spannung erhalten wird.

6. Verfahren nach Anspruch 5, wobei die GS-stromreferenz basierend auf einer Amplitudenbegrenzung des geordneten GS-stroms erhalten wird.

7. Verfahren nach einem der vorhergehenden Ansprüche, wobei die GS-spannungskorrektur durch die GS-stromsteuerung basierend auf dem GS-stromfehler unter Verwendung einer Proportional-Integral-, PI-, Steuerung erhalten wird.

8. Verfahren nach einem der vorhergehenden Ansprüche, wenn es von Anspruch 4 abhängt, wobei die Wirkleistungsreferenz an einem Leistungssteuerungsende durch Addieren eines Wirkleistungsfehlers, basierend auf einer Differenz zwischen der geordneten Wirkleistung und einer tatsächlichen Wirkleistung, zu einer geordneten Wirkleistung erhalten wird.

9. Verfahren nach einem der vorhergehenden Ansprüche, ferner umfassend:
Bestimmen, ob sich die VSC-Station in einem GS-spannungssteuermodus befindet und
Erzeugen, auf der Grundlage, dass bestimmt wird, dass sich die VSC-Station im GS-spannungssteuermodus befindet,
der GS-spannungsreferenz durch Summieren der GS-spannungskorrektur und einer der geordneten GS-spannung und der tatsächlichen GS-spannung.

10. Verfahren nach Anspruch 9, wenn es von Anspruch 4 abhängt, umfassend das Bestimmen, auf der Grundlage, dass bestimmt wird, dass der GS-fehler nicht aufgetreten ist, dass die GS-spannungskorrektur einen Nullwert hat.

11. Verfahren nach Anspruch 9 oder 10, wobei entweder der geordnete GS-wert oder der tatsächliche GS-wert vor dem Summieren unter Verwendung einer Rückkopplungsschleife und basierend auf einem GS-spannungsfehler korrigiert wird, der basierend auf einer Differenz zwischen der tatsächlichen GS-spannung und der erzeugten GS-spannungsreferenz erhalten wird.

12. Verfahren nach Anspruch 11, wobei die geordnete GS-spannung vor dem Korrigieren ratenbegrenzt wird.

13. Verfahren nach Anspruch 11 oder 12, wobei die Rückkopplungsschleife eine Proportional-Integral-, PI-, Steuerung umfasst, die mit dem GS-spannungsfehler arbeitet.

14. Verfahren nach einem der vorhergehenden Ansprüche, ferner umfassend:
Bestimmen, ob sich die VSC-Station in einem Wirkleistungssteuermodus befindet und
Erzeugen, auf der Grundlage, dass bestimmt wird, dass sich die VSC-Station im Wirkleistungssteuermodus befindet, der GS-spannungsreferenz durch Summieren der GS-spannungskorrektur und einer der geordneten GS-spannung und der tatsächlichen GS-spannung.

15. Verfahren nach einem der vorhergehenden Ansprüche, wobei das Schalten des mindestens einen MMC auch auf einer Wechselstrom, WS, -spannungsreferenz basiert.

16. Verfahren nach Anspruch 15, ferner umfassend das Bestimmen, unter Verwendung einer Wechselstrom, WS, - vektorsteuerung, mindestens einer d-Referenz, basierend auf einem Summenzellen-Kondensatorspannungsfehler, und mindestens einer q-Referenz, basierend auf einem Blindleistungsfehler und/oder einem WS-spannungsfehler; und
Bestimmen der WS-spannungsreferenz basierend auf der d-Referenz und der q-Referenz.

17. Verfahren nach einem der vorhergehenden Ansprüche, wobei das Schalten des mindestens einen MMC auch auf einer Komponente aus einer Umlaufstrom-Steuerkomponente und/oder einer Welligkeitskompensations-Steuerkomponente basiert.

18. VSC-Station (VSC = "Voltage Source Converter") (700) für ein Hochspannungs-Energieübertragungssystem, umfassend:
mindestens einen modularen "Multi-Level-Converter", MMC, (710a, 710b), der mindestens ein FB-MMC-Submodul ("Full-Bridge-MMC") umfasst, und
eine Steuerung (740), die angepasst ist, um den mindestens einen MMC (710a, 710b) durch Durchführen des Verfahrens nach einem der vorhergehenden Ansprüche zu steuern.

19. Hochspannungs-Energieübertragungssystem (800), das angepasst ist, um elektrische Energie zu übertragen, wobei das System (800) eine erste Stromrichterstation (810) und eine zweite Stromrichterstation (820) umfasst, wobei die erste Stromrichterstation (810) und/oder die zweite Stromrichterstation (820) eine Spannungsquellen-Stromrichterstation nach Anspruch 18 ist.

## Revendications

1. Procédé de commande d'un courant à courant continu, CC, dans une station de convertisseur de source de tension, VSC, faisant partie d'un système de transmission de puissance à haute tension, où la station VSC comprend au moins un convertisseur modulaire à niveaux multiples, MMC, comprenant au moins un sous-module MMC à pont complet, FB-MMC, ledit procédé comprenant les étapes suivantes :
déterminer une référence de courant à courant continu, CC, (212 ; 628) ;
déterminer, en utilisant un contrôleur de courant CC (200 ; 600), une correction de tension CC (222 ; 636) basée sur une erreur de courant CC (632) obtenue sur la base d'une différence entre la référence de courant CC (212 ; 628) et un courant CC réel (210 ; 630) ;
générer une référence de tension CC (658) basée sur une somme de ladite correction de tension CC (222 ; 636) et
au moins l'une d'une tension CC réelle (612) et d'une tension CC commandée (644) ; et
commuter ledit au moins un MMC sur la base de ladite référence de tension CC,
ledit procédé étant **caractérisé par** les étapes suivantes :
déterminer si un défaut CC s'est produit dans le système de transmission d'énergie,
déterminer, sur la base du fait qu'il est déterminé que le défaut CC ne s'est pas produit, que la référence de courant CC est égale au courant CC réel, et
commander, sur la base du fait qu'il est déterminé que le défaut CC s'est produit, un courant de défaut CC à zéro ou proche de zéro par ladite commutation, où la commande du courant de défaut CC à zéro ou proche de zéro comprend de déterminer le fait que la référence de courant CC a, au moins temporairement, une valeur nulle ou proche de zéro.

2. Procédé selon la revendication 1, dans lequel la commande du courant de défaut CC à zéro ou proche de zéro comprend de déterminer le fait que la référence de courant CC a une valeur constante nulle ou proche de zéro.

3. Procédé selon la revendication 1 ou la revendication 2, dans lequel, sur la base du fait qu'il est déterminé que le défaut de courant CC s'est produit, la référence de courant CC a au moins une composante de courant sinusoïdale.

4. Procédé selon l'une quelconque des revendications précédentes, comprenant en outre l'étape suivante :
déterminer, sur la base du fait qu'il est déterminé que le défaut CC ne s'est pas produit, ladite référence de courant CC sur la base d'une référence de puissance active et d'au moins l'une de ladite tension CC réelle et de ladite tension CC commandée.

5. Procédé selon la revendication 4, dans lequel ladite référence de courant CC est obtenue sur la base d'un courant CC commandé obtenu sur la base d'une fraction de ladite référence de puissance active par rapport à ladite tension CC réelle.

6. Procédé selon la revendication 5, dans lequel ladite référence de courant CC est obtenue sur la base d'une limitation d'amplitude dudit courant CC commandé.

7. Procédé selon l'une quelconque des revendications précédentes, dans lequel la correction de tension CC est obtenue par le contrôleur de courant CC sur la base de l'erreur de courant CC en utilisant un contrôleur proportionnel-intégral, PI.

8. Procédé selon l'une quelconque des revendications précédentes, lorsqu'elles dépendent de la revendication 4, dans lequel la référence de puissance active à une extrémité de commande de puissance est obtenue en ajoutant, à une puissance active commandée, une erreur de puissance active basée sur une différence entre la puissance active commandée et une puissance active réelle.

9. Procédé selon l'une quelconque des revendications précédentes, comprenant en outre les étapes suivantes :
déterminer si ladite station VSC est dans un mode de commande de tension CC, et
générer, sur la base du fait qu'il est déterminé que ladite station VSC est dans le mode de commande de tension CC, ladite référence de tension CC en additionnant ladite correction de tension CC et l'une de ladite tension CC commandée et de ladite tension CC réelle.

10. Procédé selon la revendication 9, lorsqu'elle dépend de la revendication 4, comprenant de déterminer, sur la base du fait qu'il est déterminé que ledit défaut CC ne s'est pas produit, que la correction de tension CC a une valeur nulle.

11. Procédé selon la revendication 9 ou la revendication 10, dans lequel ladite une valeur de la valeur de courant CC commandée et de la valeur de courant CC réelle est corrigée, avant la sommation, en utilisant une boucle de rétroaction et sur la base d'une erreur de tension CC obtenue sur la base d'une différence entre la tension CC réelle et la référence de tension CC générée.

12. Procédé selon la revendication 11, dans lequel la tension CC commandée est limitée avant d'être corrigée.

13. Procédé selon la revendication 11 ou la revendication 12, dans lequel la boucle de rétroaction comprend un contrôleur proportionnel-intégral, PI, fonctionnant sur l'erreur de tension CC.

14. Procédé selon l'une quelconque des revendications précédentes, comprenant en outre les étapes suivantes :
déterminer si ladite station VSC est dans un mode de commande de puissance active ; et
générer, sur la base du fait qu'il est déterminé que ladite station VSC est dans le mode de commande de puissance active, ladite référence de tension CC en additionnant ladite correction de tension CC et l'une de ladite tension CC commandée et de ladite tension CC réelle.

15. Procédé selon l'une quelconque des revendications précédentes, dans lequel ladite commutation dudit au moins un MMC est également basée sur une référence de tension à courant alternatif, CA.

16. Procédé selon la revendication 15, comprenant en outre de déterminer, en utilisant une commande vectorielle de courant alternatif, CA, au moins une référence d basée sur une erreur de tension de condensateur de cellule de somme et au moins une référence q basée sur au moins une erreur de puissance réactive et une erreur de tension CA ; et
déterminer ladite référence de tension CA sur la base de ladite référence d et de ladite référence q.

17. Procédé selon l'une quelconque des revendications précédentes, dans lequel ladite commutation dudit au moins un MMC est également basée sur au moins une composante de commande de courant de circulation et une composante de commande de compensation d'ondulation.

18. Station (700) de convertisseur de source de tension, VSC, pour un système de transmission de puissance à haute tension, comprenant :
au moins un convertisseur modulaire à niveaux multiples, MMC, (710a, 710b) comprenant au moins un sous-module MMC à pont complet, FB-MMC, et
un contrôleur (740) adapté pour commander ledit au moins un MMC (710a, 710b) en exécutant le procédé de l'une quelconque des revendications précédentes.

19. Système de transmission de puissance à haute tension (800) adapté pour transférer de l'énergie électrique, ledit système (800) comprenant une première station de convertisseur (810) et une seconde station de convertisseur (820), où au moins l'une de la première station de convertisseur (810) et de la seconde station de convertisseur (820) est une station de convertisseur de source de tension selon la revendication 18.
